# DEMANDE DE BREVET EUROPEEN

(11) **EP 4 406 787 A1**
(43) Date de publication de la demande: **31.07.2024**
(21) Numéro de dépôt: 24153320.7
(22) Date de dépôt: 23.01.2024
(51) Int. Cl.: B60R 19/18

(54) **PARE-CHOCS AVANT DE VÉHICULE AUTOMOBILE**

(30) Priorité: 26.01.2023 FR 2300735
(71) Demandeur: Stellantis Auto SAS, 78300 Poissy (FR)
(72) Inventeur: BOUDAN, JULIEN, 91210 DRAVEIL (FR); ROYER, GUILLAUME, 91680 BRUYERES LE CHATEL (FR); PERON, RODOLPHE, 95220 HERBLAY (FR)

(57) **Abrégé**

L'invention a pour objet un ensemble (18) pour système de pare-chocs (16) de véhicule automobile, l'ensemble comprenant : une peau de pare-chocs (24) ; une armature de maintien (30) de la peau de pare-chocs. L'armature de maintien comprend : une zone de réception transversale (44) pour un absorbeur de choc (34), un dispositif de fixation (42) de l'absorbeur de choc. Le dispositif de fixation comprenant une première portion de maintien (46), une portion de jonction (58) s'étendant sous la première portion de maintien, et une deuxième portion de maintien (48) s'étendant depuis la portion de jonction (58), la zone de réception transversale s'étendant verticalement entre la première portion de maintien de la deuxième portion de maintien.

## Description

La présente invention revendique la priorité de la demande française 2300735 déposée le 26 janvier 2023, dont le contenu (texte, dessins et revendications) est ici incorporé par référence.

L'invention concerne un ensemble pour système de pare-chocs d'un véhicule automobile. L'invention a également pour objet un véhicule automobile avec un système de pare-chocs.

Un véhicule automobile comprend un système de pare-chocs avant. Ce système présente une peau de pare-chocs formée d'un ou de plusieurs panneaux extérieurs. Ces panneaux extérieurs définissent l'enveloppe externe du véhicule. De manière générale, Les panneaux extérieurs doivent respecter différents critères de réparabilité en fonction de la vitesse des chocs qu'ils sont susceptibles d'amortir. Par exemple pour un choc à faible vitesse, le système de pare-chocs avant est conçu afin d'absorber le choc par déformation élastique, donc sans nécessiter de réparation ultérieure. Par faible vitesse, on entend un choc à vitesse inférieure ou égale à 10 km/h. Lors de ce choc, la peau de pare-chocs se déforme de manière élastique lors du contact avec l'obstacle, puis revient en position, sans que ne subsiste de déformation permanente après éloignement de l'obstacle impliqué dans le choc.

Le système de pare-chocs comporte couramment un ou plusieurs modules d'absorption de choc à l'avant de la structure du véhicule automobile. Les modules comprennent, entre autres, un absorbeur formé d'un corps transversal. Cet absorbeur est apte à se déformer et à absorber l'énergie d'une collision. Un tel absorbeur est généralement agencé derrière et à proximité de la peau de pare-chocs. Sa proximité avec cette dernière l'expose et l'implique lors des évènements de type choc piéton. En effet, dans pareil cas, une jambe de piéton s'enfonce dans la peau de pare-chocs et bute contre le corps transversal. Cela crée un risque de blessure,

Une armature de pare-chocs permet de maintenir la peau de pare-chocs. L'armature est un élément essentiellement rigide qui permet de maintenir en forme la peau de pare-chocs qui est généralement réalisée en matériau plastique essentiellement. Cette armature est couramment fixée au-dessus de l'absorbeur. Elle rentre également enjeu lors d'un scénario de choc piéton.

Le document FR3117429A1 décrit un véhicule automobile présentant un dispositif de pare-chocs arrière. Le dispositif de pare-chocs comporte une peau de pare-chocs qui inclue une face extérieure et une face intérieure, un moyen d'absorption disposé du côté de la face intérieure de la peau et destiné à être en vis-à-vis d'une poutre de pare-chocs lorsque le dispositif de pare-chocs est installé sur un véhicule, de sorte à s'appuyer contre ladite poutre en cas de chocs contre la face extérieure de la peau de pare-chocs. Le moyen d'absorption est issu de matière avec la peau de pare-chocs.

Un ou plusieurs éléments de rigidification, communément appelés armature de peau de pare-chocs, sont fixés derrière la peau de pare-chocs. Le rôle de cette armature est de donner de la raideur à la peau de pare-chocs. Généralement, un espace existe entre cette armature ou la peau de pare-chocs, et la poutre arrière de pare-chocs, car la courbure de la peau de pare-chocs ou de l'armature est plus importante que celle de la poutre de pare-chocs. Une telle solution facilite l'assemblage en rationalisant le nombre de pièces.

Le document FR3072342A1 présente un véhicule comprenant, en partie avant, deux goussets disposés chacun d'un côté dudit véhicule, un système de refroidissement s'étendant entre les deux goussets et un dispositif de pare-chocs avant s'étendant en avant desdits goussets, ledit dispositif de pare-chocs comprenant une partie supérieure comprenant une poutre de pare-chocs, et une partie inférieure comprenant un absorbeur inférieur s'étendant d'un côté à l'autre du véhicule, le véhicule étant remarquable en ce que l'absorbeur inférieur présente une face arrière comprenant au moins une rampe sous la forme d'une surface inclinée orientée de bas en haut et en direction de l'avant du véhicule, ladite rampe étant disposée au moins en partie en regard du système de refroidissement. Ce document permet de réduire les dommages en cas de collision.

Afin d'optimiser leur maintien, il est connu de fixer une armature de maintien à un absorbeur de choc. Or, il existe un besoin d'améliorer encore ce maintien.

L'invention a pour objectif de répondre à au moins un des problèmes ou inconvénients rencontrés dans l'art antérieur. En particulier, l'invention a pour objectif d'améliorer le maintien entre une armature de peau de pare-chocs et un absorbeur de choc. L'invention a également pour objectif d'optimiser le transport, le maintien, la facilité d'assemblage et le coût d'un système de pare-chocs d'un système de pare-chocs de véhicule automobile.

Selon un premier aspect, l'invention propose un ensemble pour système de pare-chocs de véhicule automobile, l'ensemble comprenant : une peau de pare-chocs ; une armature de maintien de la peau de pare-chocs ; l'armature de maintien comprenant : une zone de réception transversale destinée à recevoir un absorbeur de choc, un dispositif de fixation de l'absorbeur de choc, le dispositif de fixation comprenant une première portion de maintien; remarquable en ce que le dispositif de fixation comprend en outre une portion de jonction s'étendant sous la première portion de maintien, et une deuxième portion de maintien s'étendant depuis la portion de jonction, la zone de réception transversale s'étendant verticalement entre la première portion de maintien de la deuxième portion de maintien afin d'y maintenir l'absorbeur de choc.

L'invention ajoute une portion de maintien décalée, sous la première. Ensemble, les portions de maintien bloquent de manière stable l'absorbeur de choc au fond de sa zone dédiée. Dans le contexte de son transport, l'ensemble ainsi formé reste simple à transporter, le risque de désassemblage accidentel de l'absorbeur est limité. Ce mode de montage permet un assemblage aisé, que ce soit manuellement ou par machine. Par ailleurs, cette solution optimise les coûts puisque les portions peuvent être produites en même temps.

Préférentiellement, l'ensemble comprend en outre un absorbeur de choc avec un corps transversal dans la zone de réception transversale ; l'absorbeur de choc comprenant un logement inférieur, la deuxième portion de maintien étant agencée dans ledit logement inférieur ; préférentiellement le logement inférieur comprend une profondeur, et la deuxième portion de maintien comprend une épaisseur égale à ladite profondeur.

Préférentiellement, la deuxième portion de maintien comprend une longueur longitudinale, et l'absorbeur de choc comprend une épaisseur longitudinale supérieure ou égale à la longueur longitudinale.

Préférentiellement, la peau de pare-chocs présente une ouverture supérieure et une ouverture inférieure, la première portion de maintien et la deuxième portion de maintien étant verticalement entre l'ouverture supérieure et l'ouverture inférieure ; préférentiellement la zone de réception transversale est verticalement entre l'ouverture supérieure et l'ouverture inférieure.

Préférentiellement, la première portion de maintien comprend un premier crochet de rétention, et la deuxième portion de maintien comprend un deuxième crochet de rétention avec un sens de rétention vers la portion de jonction.

Préférentiellement, la deuxième portion de maintien comprend un premier tronçon avec une première largeur, un deuxième tronçon avec une deuxième largeur inférieure à la première largeur, et un tronçon coudé longitudinalement entre le premier tronçon et le deuxième tronçon.

Préférentiellement, la deuxième portion de maintien comprend un corps creux, le premier tronçon comprend une largeur intérieure supérieure à la deuxième largeur.

Préférentiellement, le dispositif de fixation est un premier dispositif de fixation, l'absorbeur de choc comprend en outre un deuxième dispositif de fixation symétrique au premier dispositif de fixation ; l'armature de maintien comprend des moyens de rétention transversalement entre le premier dispositif de fixation et le deuxième dispositif de fixation, préférentiellement les moyens de rétention comprennent des troisièmes portions de maintien verticalement au niveau de la première portion de maintien.

Préférentiellement, la peau de pare-chocs comprend une face avant, une face arrière, et un écran grillagé dans l'ouverture inférieure, la deuxième portion de maintien étant verticalement au-dessus de l'écran grillagé.

Préférentiellement, la peau de pare-chocs comprend un bord supérieur, l'armature de maintien étant fixée audit bord supérieur et/ou s'étendant verticalement au moins jusqu'audit bord supérieur.

Préférentiellement, l'ensemble comprend un absorbeur de choc.

Préférentiellement, l'absorbeur de choc est monobloc.

Préférentiellement, l'absorbeur de choc comprend un matériau expansé.

Préférentiellement, l'absorbeur de choc comprend une première densité, et l'armature comprend une deuxième densité au moins cinq fois ou au moins dix fois supérieure à la première densité.

Préférentiellement, l'armature de maintien est monobloc.

Préférentiellement, la deuxième portion de maintien s'étend depuis la portion de jonction vers l'opposé de la peau de pare-chocs.

Préférentiellement, la deuxième portion de maintien comprend un corps creux.

Préférentiellement, la portion de jonction comprend une plaque verticale.

Préférentiellement, la portion de jonction est contre la peau de pare-chocs.

Préférentiellement, la portion de jonction présente une épaisseur constante entre la première portion de maintien et la deuxième portion de maintien.

Préférentiellement, le deuxième dispositif de fixation est identique ou similaire au premier dispositif de fixation.

Selon un autre aspect, l'invention propose une armature de maintien de peau-de parechocs de véhicule automobile ; l'armature de maintien comprend une zone de réception transversale d'un absorbeur de choc et un dispositif de fixation comprenant une première portion de maintien destinée à être fixée à l'absorbeur de choc ; remarquable en ce que le dispositif de fixation comprend en outre une portion de jonction s'étendant sous la première portion de maintien, et une deuxième portion de maintien destinée à maintenir l'absorbeur de choc et s'étendant depuis la portion de jonction sous la première portion de maintien.

Selon un autre aspect, l'invention propose un ensemble pour système de pare-chocs de véhicule automobile, l'ensemble comprenant : un absorbeur de choc comprenant un corps transversal, une armature de maintien destinée à maintenir une peau de pare-chocs, l'armature de maintien comprenant un dispositif de fixation avec une première portion de maintien de l'absorbeur de choc ; remarquable en ce que le dispositif de fixation comprend une deuxième portion de maintien de l'absorbeur de choc ; ledit absorbeur de choc étant verticalement entre la première portion de maintien et la deuxième portion de maintien ; le dispositif de fixation comprend optionnellement une portion de jonction s'étendant verticalement au niveau de l'absorbeur de choc et reliant verticalement la première portion de maintien à la deuxième portion de maintien.

Préférentiellement, l'ensemble comprend une peau de pare-chocs fixée à l'armature de maintien.

Selon un autre aspect, l'invention propose un ensemble pour système de pare-chocs de véhicule automobile, l'ensemble comprenant : une peau de pare-chocs, une armature de maintien de la peau de pare-chocs, un absorbeur de choc avec un corps transversal, l'armature de maintien comprenant une portion de maintien fixée à l'absorbeur de choc ; remarquable en ce que l'armature de maintien comprend une pince de maintien fixant l'absorbeur de choc.

Préférentiellement, l'ensemble comprend un absorbeur de chocs et/ou une peau de pare-chocs fixés à l'armature de maintien.

Selon un autre aspect, l'invention propose un véhicule automobile avec une armature, remarquable en ce que l'armature est conforme à l'invention.

Selon un autre aspect, l'invention propose un véhicule automobile comprenant un système de pare-chocs avec un ensemble, remarquable en ce que l'ensemble est conforme à l'invention.

Préférentiellement, le système de pare-chocs est un système de pare-chocs avant.

Préférentiellement, le véhicule automobile comprend une structure avec une traverse présentant une surface avant, la deuxième portion de maintien comprend une extrémité arrière face à la surface avant, préférentiellement l'extrémité arrière est contre la surface avant de la traverse.

L'invention sera bien comprise et d'autres aspects et avantages apparaîtront clairement à la lecture de la description qui suit, donnée en référence aux figures annexées et énumérées ci-dessous.
La figure 1 est une vue de face d'un véhicule automobile selon l'invention.
La figure 2 montre une vue arrière d'un ensemble pour système de pare-chocs de véhicule automobile selon l'invention.
La figure 3 est une vue de face d'une armature de maintien d'un ensemble pour système de pare-chocs de véhicule automobile selon l'invention.
La figure 4 est une coupe verticale et longitudinale d'un ensemble pour système de pare-chocs de véhicule automobile selon l'invention.
La figure 5 est une coupe selon un plan horizontal d'une deuxième portion de maintien d'un ensemble pour système de pare-chocs de véhicule automobile selon l'invention.

Dans la description qui suit, le terme « comprendre » est synonyme de « inclure » et n'est pas limitatif en ce qu'il autorise la présence d'autres éléments dans le véhicule automobile ou dans l'ensemble ou le système de pare-chocs auquel il se rapporte. Il est entendu que le terme « comprendre » inclut les termes « consister en ». Les termes « externe » et « interne » désigneront respectivement ce qui est orienté vers l'extérieur du véhicule et vers l'intérieur du véhicule.

Dans la présente description, le terme « longitudinal », le terme « longitudinalement », le terme « transversal », et le terme « transversalement » sont employés selon le référentiel du véhicule, dans la configuration de montage. Le terme « longitudinal » correspond à la direction principale de déplacement du véhicule. Le terme « transversal » correspond à une direction perpendiculaire à la direction principale de déplacement du véhicule. Le terme « avant » est en référence au sens principal de déplacement du véhicule. Le terme « arrière » désigne l'opposé de l'avant du véhicule.

L'axe X représente la direction longitudinale, l'axe Y représente la direction transversale, et l'axe Z représente la direction verticale du véhicule automobile. Ces trois axes définissent un trièdre direct dont l'orientation est conservée au travers des figures.

Dans la présente description, les plages de valeurs comprennent les bornes qui les délimitent.

Dans la présente description, les caractéristiques techniques sont définies dans la configuration de montage de l'ensemble, à moins que le contraire ne soit mentionné explicitement.

Au travers de la description, les différentes figures utilisent les mêmes signes de référence pour désigner des entités identiques ou similaires.

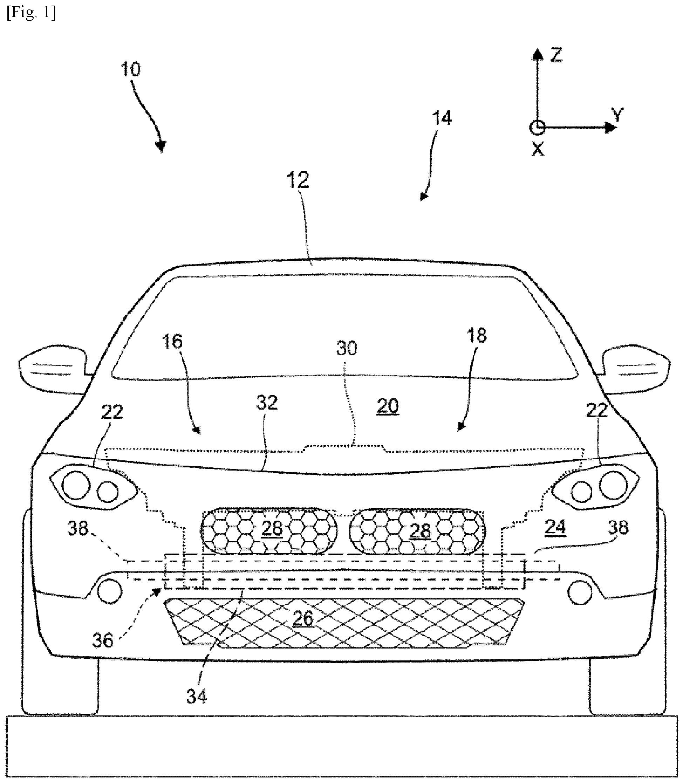

La figure 1 représente un véhicule automobile 10 selon l'invention. Le véhicule automobile 10 comprend des moyens de stockage d'énergie et au moins un moteur (non représenté) adaptés pour entraîner ledit véhicule automobile 10.

Le véhicule automobile 10 comprend une structure 12, également appelée caisse. La structure 12 forme une ossature et supporte différents organes du véhicule automobile 10, dont le moteur et des ouvrants. La structure 12 forme partiellement la carrosserie 14 du véhicule au niveau du toit, des ailes avant, des piliers. La carrosserie 14 forme l'enveloppe externe du véhicule automobile 10. La structure 12 peut être formée de différentes tôles embouties et soudées. Elle présente différentes poutres tels des longerons.

Le véhicule automobile 10 comprend en outre un système de pare-chocs 16, par exemple un système de pare-chocs avant. Le système de pare-chocs 16 peut former la façade avant du véhicule automobile 10. Le système de pare-chocs 16, en particulier chacun de ses éléments, est adapté pour résister à des chocs, à des vitesses jusqu'à 10 km/h, préférentiellement jusqu'à 15 km/s ; sans qu'il n'y ait besoin de remplacer de pièces spécifiques du véhicule. Le système de pare-chocs 16 est également adapté pour éviter de blesser, ou limiter l'importance d'éventuelles blessures dans l'éventualité d'un choc piéton.

Le système de pare-chocs 16 comprend un ensemble 18. L'ensemble 18 est entendu comme un groupe de pièces ou parties du système de pare-chocs 16. Le véhicule automobile 10 comprend également un volet avant 20, couramment appelé capot moteur suivant le type de véhicule. Le volet avant 20 est monté pivotant sur la structure 12 entre une position ouverte et une position fermée.

Le véhicule automobile 10 présente en outre au moins un dispositif lumineux 22. Les dispositifs lumineux 22 peuvent être des dispositifs lumineux réglementaires. Chaque dispositif lumineux 22 est apte à éclairer l'environnement à distance du véhicule automobile 10 pour le confort de conduite, et est apte à émettre des signaux lumineux à l'attention des autres usagers.

Le système de pare-chocs 16 comprend une peau de pare-chocs 24. La peau de pare-chocs 24 matérialise un bouclier avant. La peau de pare-chocs 24 peut être monobloc. Elle peut être formée d'un seul panneau extérieur. La peau de pare-chocs 24 reçoit un revêtement extérieur telle une couche de peinture à la teinte du véhicule automobile 10. La peau de pare-chocs 24 s'étend jusqu'au volet avant 20 et jusqu'aux ailes latérales (non représentés). Selon une alternative, la peau de pare-chocs est formée d'une pluralité de panneaux extérieurs.

La peau de pare-chocs 24 délimite différentes ouvertures, dont des ouvertures pour les dispositifs lumineux 22. La peau de pare-chocs 24 délimite également des ouvertures d'entrée d'air. Les ouvertures d'entrée d'air permettent d'alimenter en air un moteur à combustion ou un système de régulation en température. Ces ouvertures d'entrée d'air sont équipées de grilles de protection contre les projections. Les ouvertures d'entrée d'air comprennent par exemple une ouverture inférieure 26, et au moins une ouverture supérieure 28 ; cette dernière étant optionnellement scindé en deux ou plus.

L'ensemble 18 comprend une armature de maintien 30. L'armature de maintien 30 forme une sous-structure supportant la peau de pare-chocs 24. Elle la renforce. Elle y est fixée en plusieurs points répartis transversalement. L'armature de maintien 30 s'étend transversalement au moins sur la moitié de la peau de pare-chocs 24. L'armature de maintien 30 contourne les ouvertures supérieures 28. Elle s'étend transversalement jusqu'aux dispositifs lumineux 22. Elle s'étend verticalement jusqu'au bord supérieur 32 de la peau de pare-chocs 24, et se prolonge optionnellement au-dessus. Le bord supérieur 32 épouse le bord inférieur ou bord avant du volet avant 20.

L'ensemble 18 comprend un absorbeur de choc 34 qui comprend un corps transversal 36 telle une barre transversale. L'absorbeur de choc 34 est fixé à la structure 12 du véhicule automobile 10. Par exemple, il est fixé à des extrémités avant de brancards avant, formant des longerons avant (non représentés) de la structure 12. Cette fixation s'effectue par l'intermédiaire d'une traverse 38, également appelée poutre transversale, qui est fixée aux brancards avant. Des caissons déformables, également connus sous l'expression anglo-saxonne « crash box » peuvent être ajoutés à l'interface de fixation.

L'absorbeur de choc 34 est agencé en avant de la traverse 38. Il peut former un absorbeur supérieur. L'ensemble 18 peut également comprendre un absorbeur inférieur ; sous l'absorbeur supérieur. Chaque absorbeur est configuré pour absorber de l'énergie dans l'éventualité d'un choc piéton. A cet effet, il comprend un matériau en mousse.

L'armature de maintien 30 est fixée au corps transversal 36 de l'absorbeur de choc 34. Ils sont superposés et sont agencés derrière la peau de pare-chocs 24. L'armature de maintien 30 est agencée au-dessus de ladite traverse 38. L'absorbeur de choc 34 et optionnellement la traverse 38 sont verticalement entre l'ouverture inférieure 26 et le groupe des ouvertures supérieures 28.

Le véhicule automobile peut par exemple être un véhicule automobile particulier ou un véhicule automobile utilitaire.

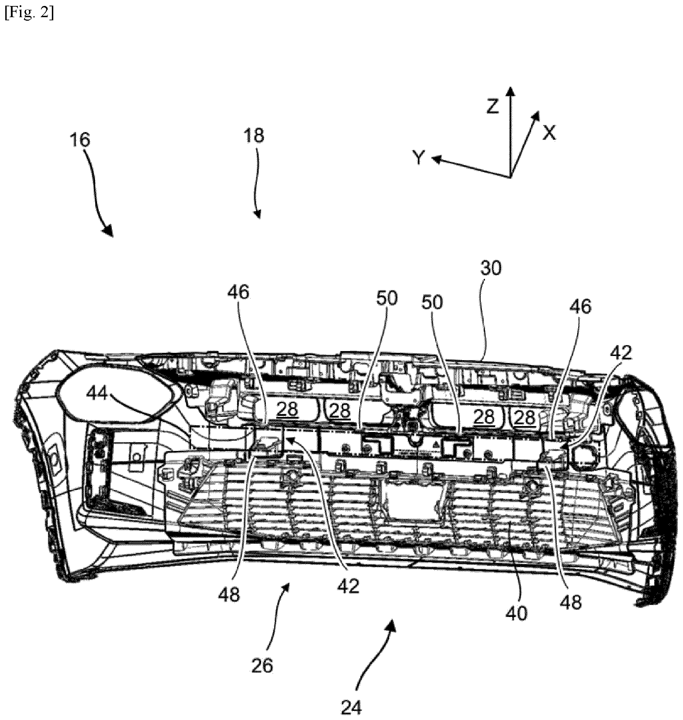

La figure 2 présente un ensemble 18 pour système de pare-chocs 16 de véhicule automobile. Le véhicule automobile peut correspondre à celui présenté en relation avec la figure 1. L'absorbeur de choc n'est pas représenté par soucis de clarté.

L'ensemble 18 comprend une armature de maintien 30. Les ouvertures supérieures 28 de la peau de pare-chocs 24 sont représentées. L'ouverture inférieure 26 est munie d'une grille. La grille est formée d'un écran grillagé 40 fixé en face arrière de la peau de pare-chocs 24. L'écran grillagé 40 est au travers de l'ouverture inférieure 26. Il la masque. Un autre écran grillagé 40 couvre l'ouverture supérieure 28.

L'armature de maintien 30 comprend au moins un, par exemple plusieurs dispositifs de fixation 42. Les dispositifs de fixation 42 sont destinés à fixer l'absorbeur de choc. Ils s'étendent verticalement. Les dispositifs de fixation 42 forment chacun une pince pour enserrer l'absorbeur de choc. Les dispositifs de fixation 42 sont des dispositifs latéraux. Ils sont symétriques selon un plan vertical et longitudinal. Les dispositifs de fixation 42 sont identiques ou similaires. Les dispositifs de fixation 42 sont utiles pour maintenir l'absorbeur de choc dans le véhicule automobile tel que monté. Ils sont également utiles en phase de transport de l'ensemble 18, avant montage sur la structure du véhicule automobile. Ils présentent une double utilité.

L'armature de maintien 30 délimite une zone transversale de réception 44 de l'absorbeur de choc. La zone transversale de réception 44 est horizontale. Elle est délimitée par les dispositifs de fixation 42. La zone transversale de réception 44 est une zone de montage de l'absorbeur de choc. Elle est verticalement entre l'ouverture inférieure 26 et les ouvertures supérieures 28.

Au moins un ou chaque dispositif de fixation 42 présente une première portion de maintien 46 et une deuxième portion de maintien 48. Les portions de maintien peuvent être horizontales. Elles sont superposées. Elles sont reliées par une portion de jonction droite ou arquée ou coudée.

Pour au moins un ou chaque dispositif de fixation 42, la première portion de maintien 46 et la deuxième portion de maintien 48 sont verticalement entre les ouvertures supérieures 28 d'une part, et l'ouverture inférieure 26 d'autre part. Ainsi, l'invention parvient à intégrer une solution de montage de l'absorbeur de choc malgré la contrainte physique liée à la présence d'ouvertures. L'invention apporte une solution compacte. Au moins une ou chaque deuxième portion de maintien 48 est disposée verticalement au-dessus de l'écran grillagé 40, notamment inférieur.

L'armature de maintien 30 comprend en outre des moyens de rétention 50 transversalement entre le premier dispositif de fixation 42 et le deuxième dispositif de fixation 42. Les moyens de rétention 50 comprennent des troisièmes portions de maintien verticalement au niveau des premières portions de maintien 46. Les troisièmes portions de maintien peuvent être identiques aux premières portions de maintien. Cet aspect facilite le montage de l'absorbeur de choc dans sa zone transversale de réception 44.

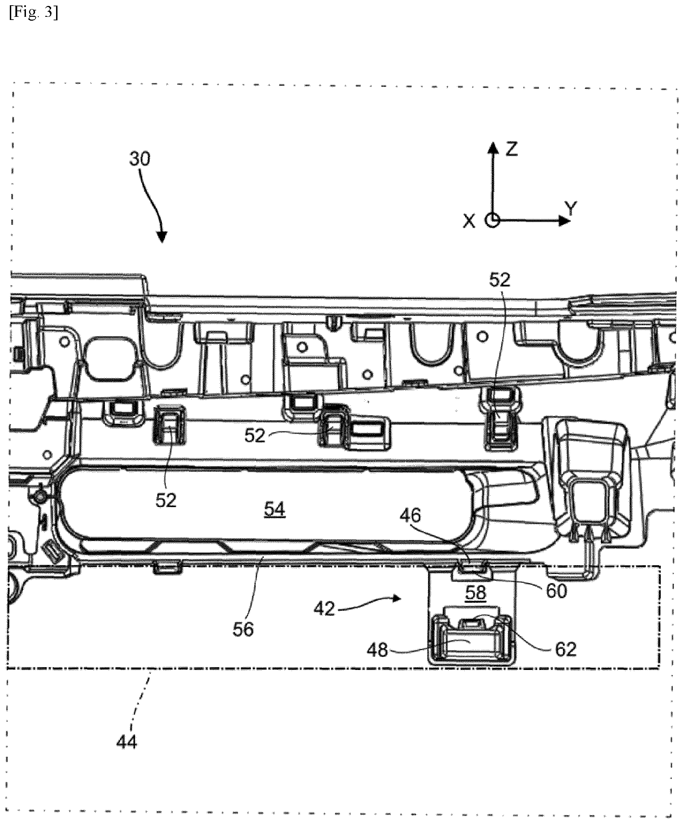

La figure 3 présente une armature de maintien 30 d'un ensemble pour système de pare-chocs de véhicule automobile. Le véhicule automobile peut correspondre à celui présenté en relation avec l'une des figures 1 à 2. Seule une moitié de l'armature de maintien 30 est représentée, toutefois le présent enseignement s'applique à l'autre moitié par symétrie.

L'armature de maintien 30 est monobloc. Elle est préférentiellement venue de matière. Elle est produite par injection. En face avant, l'armature de maintien 30 présente différents moyens de fixation 52 destinés à coopérer avec la peau de pare-chocs. Ils peuvent être fixés au bord supérieur de la peau de pare-chocs. Les moyens de fixation 52 comprennent par exemple des dispositifs d'encliquetage.

L'armature de maintien 30 présente au moins un conduit d'entrée d'air 54. Chaque conduit d'entrée d'air 54 est verticalement au-dessus de la zone transversale de réception 44. Il forme un passage longitudinal qui peut communiquer avec l'une des ouvertures supérieures. La zone transversale de réception 44 est bordée verticalement par le bord inférieur 56 de l'armature de maintien 30. Le bord inférieur 56 est sensiblement horizontal. Il s'étend transversalement.

Le dispositif de fixation 42 est verticalement au niveau de la zone transversale de réception 44. Il peut s'étendre sur toute sa hauteur. Le dispositif de fixation 42 comprend une première portion de maintien 46 et une deuxième portion de maintien 48. Elles peuvent être une portion de maintien supérieure et une portion de maintien inférieure respectivement. Le dispositif de fixation 42 présente en outre une portion de jonction 58. La portion de jonction 58 comprend une plaque verticale. Elle peut être une portion avant du dispositif de fixation 42. Elle peut être d'épaisseur constante pour augmenter sa souplesse, et donc faciliter l'introduction de l'absorbeur de choc dans les dispositifs de fixation 42.

La première portion de maintien 46 comprend un premier crochet de rétention 60, et la deuxième portion de maintien 48 comprend un deuxième crochet de rétention 62. Chaque crochet comprend un sens de rétention vers la portion de jonction 58. Le sens de rétention est opposé au sens d'insertion dans le dispositif de fixation 42. Grâce aux deux crochets, le dispositif de fixation 42 forme une pince de maintien. Cet agencement optimise la facilité de montage et la stabilité de maintien. Les crochets comprennent des surfaces de butée en regard de la portion de jonction 58.

La portion de jonction 58 s'étend sous et depuis la première portion de maintien 46. La deuxième portion de maintien 48 fait saillie depuis la portion de jonction 58. Elle est verticalement en regard de la première portion de maintien 46. Ces portions sont superposées, et décalées verticalement.

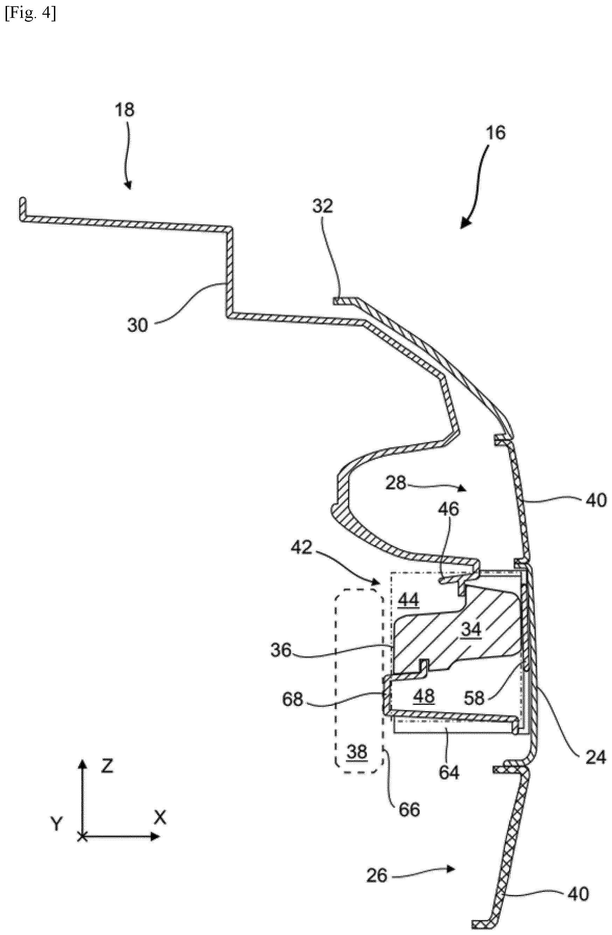

La figure 4 présente un ensemble 18 pour système de pare-chocs 16 de véhicule automobile. Le véhicule automobile peut correspondre à celui présenté en relation avec l'une des figures 1 à 3.

L'ensemble 18 comprend : une peau de pare-chocs 24 ; une armature de maintien 30 de la peau de pare-chocs 24 et un absorbeur de choc 34 qui est imbriqué dans l'armature de maintien 30, plus précisément dans une zone transversale de réception 44 de cette dernière. Il y est encastré.

L'armature de maintien 30 comprend un dispositif de fixation 42 avec une première portion de maintien 46 en face supérieure de l'absorbeur de choc 34, une portion de jonction 58 en face avant de l'absorbeur de choc 34 ; une deuxième portion de maintien 48 en face inférieure de l'absorbeur de choc 34. Ces portions définissent un « U » couché, et ouvert vers l'arrière. La portion de jonction 58 est en avant des portions de maintien (46 ; 48), elle les relie verticalement.

L'absorbeur de choc 34 comprend un matériau expansé, ce qui optimise sa masse et sa capacité à amortir un choc piéton contre une jambe. L'absorbeur de choc 34 est monobloc. L'absorbeur de choc 34 est agencé en face arrière de la peau de pare-chocs 24. Il en est localement séparé par la portion de jonction 58. L'absorbeur de choc 34 forme une doublure frontale de la peau de pare-chocs (non représentée). Il s'étend transversalement sur toute sa largeur. Il est apte à supporter et à maintenir en position la peau de pare-chocs ; au moins en face avant.

L'absorbeur de choc 34 présente un corps transversal 36 dans la zone de réception transversale 44. L'absorbeur de choc 34 comprenant un logement inférieur 64. Le logement inférieur 64 est formé en face inférieure de l'absorbeur de choc 34. La deuxième portion de maintien 48 est intégrée dans ledit logement inférieur 64. Selon une option, le logement inférieur 64 comprend une profondeur, et la deuxième portion de maintien 48 comprend une épaisseur inférieure ou égale à ladite profondeur. La profondeur et l'épaisseur sont mesurées verticalement. Ainsi, la deuxième portion de maintien 48 est englobée dans l'absorbeur de choc 34, ce qui évite de former des points durs. Cela renforce la sécurité et préserve la santé de piétons que le système 16 est susceptible de heurter.

La traverse 38 présente une surface avant 66. Cette surface avant 66 peut être verticale. La deuxième portion de maintien 48 comprend une extrémité arrière 68 face à la surface avant 66. Selon une option, l'extrémité arrière 68 est contre la surface avant 66 de la traverse 38. Dans l'éventualité d'un choc piéton à l'endroit du dispositif de fixation 42, la peau de pare-chocs 24 s'enfonce et transmet sa déformation à la deuxième portion de maintien 48 qui s'écrase contre la traverse 38. Cela favorise sa rupture programmée, et évite la persistance de points durs.

La peau de pare-chocs 24 comprend un bord supérieur 32 formant également son bord arrière. L'armature de maintien 30 s'étendant verticalement au-dessus de ce bord supérieur 32, et s'étend également en arrière. La deuxième portion de maintien 48 est verticalement entre l'écran grillagé 40 de l'ouverture inférieure 26 et l'écran grillagé 40 de l'ouverture supérieure 28. Ainsi, sa présence ne perturbe pas le flux entrant dans l'ensemble 18.

La deuxième portion de maintien 48 s'étend depuis la portion de jonction 58 et vers l'opposé de la peau de pare-chocs 24. La portion de jonction 58 est contre la peau de pare-chocs 24. Elle forme un intercalaire. La portion de jonction 58 présente une épaisseur constante entre la première portion de maintien 46 et la deuxième portion de maintien 48. Cette élasticité facilite l'introduction de l'absorbeur de choc 34.

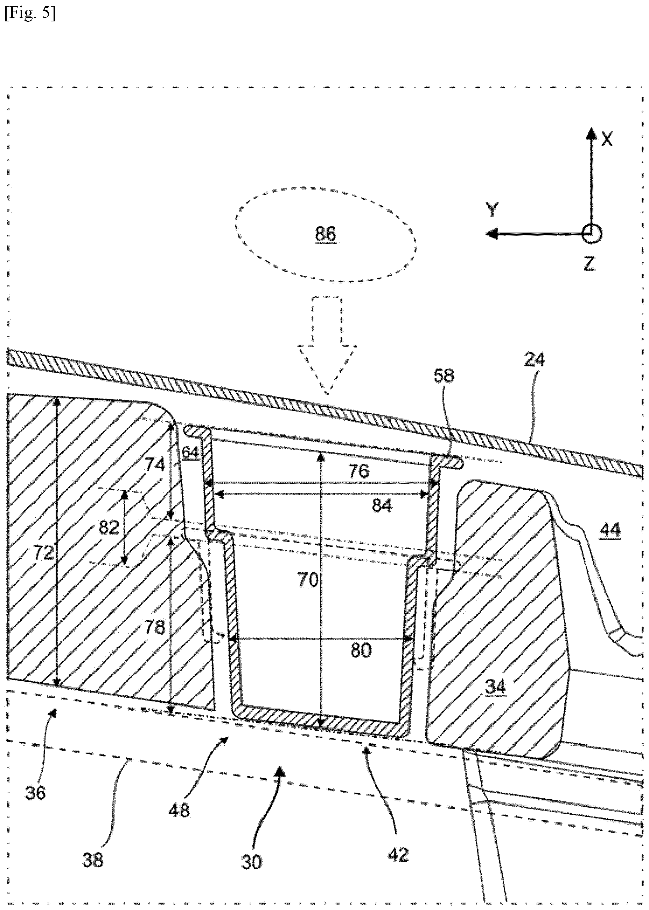

La figure 5 présente une coupe d'une deuxième portion de maintien 48 d'un dispositif de fixation 42 d'un ensemble pour système de pare-chocs de véhicule automobile. Le véhicule automobile peut correspondre à celui présenté en relation avec l'une des figures 1 à 4.

L'armature de maintien 30 comporte un dispositif de fixation 42 de l'absorbeur de choc 34 à l'intérieur de la peau de pare-chocs 24. Le dispositif de fixation 42 comprend une deuxième portion de maintien 48 évidée. Elle forme un corps creux. Elle s'étend vers la traverse 38 depuis la portion de jonction 58.

L'absorbeur de choc 34 est formé d'un corps transversal 36 dans la zone transversale de réception 44. L'absorbeur de choc 34 comprend un logement inférieur 64. Le logement inférieur 64 forme une gorge inférieure longitudinale. Le logement inférieur 64 traverse longitudinalement l'absorbeur de choc 34. La deuxième portion de maintien 48 est insérée dedans. Elle traverse longitudinalement le logement inférieur 64.

La deuxième portion de maintien 48 comprend une longueur longitudinale 70, par exemple mesurée depuis la portion de jonction 58. L'absorbeur de choc 34 comprend une épaisseur longitudinale 72 supérieure ou égale ou sensiblement égale à la longueur longitudinale 70. L'égalité n'est pas stricte. La longueur longitudinale 70 peut représenter de 90% à 110%, préférentiellement de 95% à 105%, de l'épaisseur longitudinale 72. L'épaisseur longitudinale 72 peut être mesurée au niveau de la deuxième portion de maintien 48. Tout comme pour la longueur longitudinale 70, il peut s'agir de valeurs moyennes.

Le matériau de l'absorbeur de choc 34 comprend une première densité par exemple de 0.2 ; et le matériau de l'armature 30 comprend une deuxième densité, par exemple de 1.5, au moins cinq fois supérieure à la première densité ; préférentiellement au moins dix fois supérieure à la première densité. Le matériau de l'absorbeur de choc 34 est avantageusement du polypropylène expansé (PPE). En s'écrasant, il absorbe l'énergie du choc. Ainsi, l'absorbeur de choc peut être à usage unique.

Selon la direction longitudinale, la deuxième portion de maintien 48 comprend un premier tronçon 74 avec une première largeur 76, un deuxième tronçon 78 avec une deuxième largeur 80 inférieure à la première largeur 76, et un tronçon coudé 82 longitudinalement entre le premier tronçon 74 et le deuxième tronçon 78. Le tronçon coudé 82 forme un tronçon de jonction. La première largeur 76 et la deuxième largeur 80 peuvent être des largeurs extérieures. Le premier tronçon 74 comprend une largeur intérieure 84 supérieure à la deuxième largeur 80. Les largeurs sont mesurées transversalement. Elles peuvent être des largeurs maximales ou moyennes.

Ainsi en cas de choc contre une jambe 86 au droit de la deuxième portion de maintien 48, cette dernière rompt au niveau du tronçon coudé 82 qui forme une zone fusible, c'est-à-dire effectuant une rupture programmée dans ce scénario. Le premier tronçon 74 se détache du deuxième tronçon 78 et coulisse par rapport à ce dernier. Il se déplace vers l'arrière, dans le logement inférieur 64. Ces tronçons (74 ; 78) se rétractent de manière télescopique. Le deuxième tronçon 78 reste en position lorsqu'il est en butée contre la traverse 38. Par conséquent, la rupture supprime un point dur, et évite ou limite les hypothétiques blessures à la jambe 86. Dès lors, l'invention préserve la santé des piétons. Elle optimise la sécurité et le maintien.

Selon un mode de réalisation préféré, l'armature et/ou la peau de pare-chocs sont réalisées en un matériau plastique ou composite. Le matériau plastique peut comprendre un matériau thermoplastique ou un matériau thermodurcissable. Selon un mode de réalisation préféré, le matériau plastique est sélectionné dans le groupe comprenant les résines polypropylene, polyamide, polyphtalamide, polyetherethercétone, polysulfure de phénylène, polyamideimide, polyetherimide, polyarylamide, polyépoxyde, polyester insaturés, vinylester ou polyester-vinylester. Par exemple, le matériau composite comprend une matrice en un matériau plastique tel que décrit ci-dessus avec un renfort. Par exemple, le renfort comprend des fibres de verre ou de carbone.

L'invention comprend la combinaison de tous les modes de réalisation présentés par toutes les figures.

Les figures 2 à 5 sont des vues isométriques. Elles respectent chacune une échelle propre.

## Revendications

1. Ensemble (18) pour système de pare-chocs (16) de véhicule automobile (10), l'ensemble (18) comprenant : une peau de pare-chocs (24) ; une armature de maintien (30) de la peau de pare-chocs (24) ; l'armature de maintien (30) comprenant : une zone de réception transversale (44) destinée à recevoir un absorbeur de choc (34), un dispositif de fixation (42) de l'absorbeur de choc (34), le dispositif de fixation (42) comprenant une première portion de maintien (46) ; **caractérisé en ce que** le dispositif de fixation (42) comprend en outre une portion de jonction (58) s'étendant sous la première portion de maintien (46), et une deuxième portion de maintien (48) s'étendant depuis la portion de jonction (58), la zone de réception transversale (44) s'étendant verticalement entre la première portion de maintien (46) de la deuxième portion de maintien (48) afin d'y maintenir l'absorbeur de choc (34).

2. Ensemble (18) selon la revendication 1, **caractérisé en ce que** l'ensemble (18) comprend en outre un absorbeur de choc (34) avec un corps transversal (36) dans la zone de réception transversale (44) ; l'absorbeur de choc (34) comprenant un logement inférieur (64), la deuxième portion de maintien (48) étant agencée dans ledit logement inférieur (64) ; préférentiellement le logement inférieur (64) comprend une profondeur, et la deuxième portion de maintien (48) comprend une épaisseur égale à ladite profondeur.

3. Ensemble (18) selon la revendication 2, **caractérisé en ce que** la deuxième portion de maintien (48) comprend une longueur longitudinale (70), et l'absorbeur de choc (34) comprend une épaisseur longitudinale (72) supérieure ou égale à la longueur longitudinale (70).

4. Ensemble (18) selon l'une des revendications 1 à 3, **caractérisé en ce que** la peau de pare-chocs (24) présente une ouverture supérieure (28) et une ouverture inférieure (26), la première portion de maintien (46) et la deuxième portion de maintien (48) étant verticalement entre l'ouverture supérieure (28) et l'ouverture inférieure (26) ; préférentiellement la zone de réception transversale (44) est verticalement entre l'ouverture supérieure (28) et l'ouverture inférieure (26).

5. Ensemble (18) selon l'une des revendications 1 à 4, **caractérisé en ce que** la première portion de maintien (46) comprend un premier crochet de rétention (60), et la deuxième portion de maintien (48) comprend un deuxième crochet de rétention (62) avec un sens de rétention vers la portion de jonction (58).

6. Ensemble (18) selon l'une des revendications 1 à 5, **caractérisé en ce que** la deuxième portion de maintien (48) comprend un premier tronçon (74) avec une première largeur (76), un deuxième tronçon (78) avec une deuxième largeur (80) inférieure à la première largeur (76), et un tronçon coudé (82) longitudinalement entre le premier tronçon (74) et le deuxième tronçon (78).

7. Ensemble (18) selon la revendication 6, **caractérisé en ce que** la deuxième portion de maintien (48) comprend un corps creux, le premier tronçon (74) comprend une largeur intérieure (84) supérieure à la deuxième largeur (80).

8. Ensemble (18) selon l'une des revendications 1 à 7, **caractérisé en ce que** le dispositif de fixation (42) est un premier dispositif de fixation, l'absorbeur de choc (34) comprend en outre un deuxième dispositif de fixation symétrique au premier dispositif de fixation ; l'armature de maintien (30) comprend des moyens de rétention (50) transversalement entre le premier dispositif de fixation et le deuxième dispositif de fixation, préférentiellement les moyens de rétention (50) comprennent des troisièmes portions de maintien verticalement au niveau de la première portion de maintien (46).

9. Véhicule automobile (10) comprenant un système de pare-chocs (16) avec un ensemble (18), **caractérisé en ce que** l'ensemble est conforme à l'une des revendications 1 à 8, préférentiellement le système de pare-chocs (16) est un système de pare-chocs avant.

10. Véhicule automobile (10) selon la revendication 9, **caractérisé en ce que** le véhicule automobile (10) comprend une structure (12) avec une traverse (38) présentant une surface avant (66), la deuxième portion de maintien (48) comprend une extrémité arrière (68) face à la surface avant (66), préférentiellement l'extrémité arrière (68) est contre la surface avant (66) de la traverse (38).
